# EUROPEAN PATENT SPECIFICATION

(11) **EP 4 184 267 B1**
(45) Date of publication and mention of the grant of the patent: **28.08.2024**
(21) Application number: 21209618.4
(22) Date of filing: 22.11.2021
(51) Int. Cl.: G05B 23/02

(54) **METHOD FOR DETERMINING THE STATE OF HEALTH OF AN INDUSTRIAL PROCESS**
VERFAHREN ZUR BESTIMMUNG DES ZUSTANDS EINES INDUSTRIELLEN PROZESSES
PROCÉDÉ PERMETTANT DE DÉTERMINER L'ÉTAT D'UN PROCESSUS INDUSTRIEL

(43) Date of publication of application: 24.05.2023
(73) Proprietor: ABB SCHWEIZ AG, 5400 Baden (CH)
(72) Inventor: ABUKWAIK, Hadil, 69469 Weinheim (DE); SHARMA, Divyasheel, 560048 Bangalore (IN); KLOEPPER, Benjamin, 68199 Mannheim (DE); KOTRIWALA, Arzam Muzaffar, 68526 Ladenburg (DE); RODRIGUEZ, Pablo, 69488 Birkenau (DE); SCHMIDT, Benedikt, 69117 Heidelberg (DE); TAN, Ruomu, 68309 Mannheim (DE); K R, Chandrika, 560078 Bangalore (IN); BORRISON, Reuben, 68782 Brühl (DE); DIX, Marcel, 78476 Allensbach (DE); DOPPELHAMER, Jens, 68526 Ladenburg (DE)
(74) Representative: Maiwald GmbH

(56) References cited:
- EP-B1- 3 379 357
- WO-A1-2020/261875
- CN-A- 110 174 883

## Description

### FIELD OF INVENTION

The invention relates to the monitoring of industrial processes for current or impending anomalies.

### BACKGROUND

In the dynamic industrial processes, complexity is increasingly growing as gradually more and various process units are included where the process health of each of these units contributes to the overall process health. Different statistical analysis methods have been widely used in industrial plants to investigate the different data signals as independent from each other. However, it is important to consider the hierarchical relations and causality directions in taking a step forward in detecting overall health issues.

EP 3 379 357 B1 discloses to group technical status data from a process into signal groups according to, inter alia, the physical location of the respective signals within the industrial process system, or a correlation analysis. Signals from each group are then analyzed by a machine-learning model dedicated to this group.

WO 2020/261 875 A1 discloses a prediction system that predicts the operation state of a prediction target device based on an extracted history of the operating state. An extraction unit extracts a history of an operation state of the target device satisfying an attribute information filter condition and an operation state filter condition of the plurality of target devices.

### OBJECTIVE OF THE INVENTION

It is the objective of the present invention to further improve the accuracy with which the state of health of an industrial process as a whole may be determined.

This objective is achieved by the method according to the independent claim. Further advantageous embodiments are detailed in the dependent claims.

### DISCLOSURE OF THE INVENTION

The invention provides a method for determining the state of health of an industrial process. This process is executed by at least one industrial plant that comprises an arrangement of entities. These entities may have any level of granularity. For example, an entity may correspond to a piece of equipment, such as a pump, a tank, a reactor vessel, a pipe or a valve. But an entity may also, for example, correspond to a subdivision of the process (like "fabrication of substance A", "fabrication of substance B" and "manufacture of product C from substances A and B"), or to a process module of a modular plant. The state of each entity is characterized by a set of entity state variables.

In the course of the method, values, and/or time series of values, of the entity state variables are obtained. For each entity, these values, and/or time series of values, are provided to a model corresponding to the respective entity, so that a prediction of the state of health of the respective entity is obtained. This model may, for example, predict at least one further variable of the entity from which the state of health of the entity may then be inferred. The model may also, for example, directly predict the state of health of the entity. The state of health may be in the form of a numerical score (for example, on a scale between 0 and 1, where 1 is best), but it may also be in the form of one of several available discrete classes. The classes may, for example, represent discrete grades (like from A down to F), or a binary classification as "healthy" or "unhealthy".

Models corresponding to entities may, for example, be machine learning models. From a set of training examples, these models learn the unknown propagation from the inputs (i.e., the state variables) to the outputs (i.e., the further variable or the state of health). Alternatively or in combination, for entities for which there is at least some a priori knowledge about the propagation from the inputs to the outputs, a simulation model may be used. Depending on the accuracy and level of detail with which such a simulation model mimics the behavior of the entity, the model may be expensive to compute. Therefore, a surrogate approximation of the simulation model may be used in place of the actual simulation model. The surrogate approximation may, for example, be a machine learning model that learns the behavior of the simulation model. Different types of models may be used for different entities.

Based at least in part on the layout of the industrial plant, propagation paths for anomalies between the entities that are involved in the process are determined.

Based at least in part on these propagation paths, importances of the states of health of the individual entities for the overall state of health of the process are determined. Based at least in part on these importances, the individual states of health are aggregated to obtain the overall states of health of the process.

The inventors have found that decomposing the determining of the state of health into these method steps provides, at each of these steps, the opportunity to consider a priori knowledge about the entities, or the interaction between these entities in the process as a whole. Such a priori knowledge may manifest itself in the models of the entities, in the propagation paths for anomalies, in the importances of the individual entity states of health for the overall state of health of the process, and in the mode by which the individual states of health are aggregated. The multiple opportunities to consider such knowledge at the different steps allow for a wider range of the available knowledge to be utilized. Therefore, given a concrete heap of available a priori knowledge, the accuracy with which the overall state of health may be determined is improved.

In particular, the method allows to separate qualitative causalities between anomalies in entities from quantitative causalities. The qualitative causality resides in the topology of propagation paths between entities and contains the information which entities may, in principle, be in a chain of events that starts in one entity and escalates to a degradation, a shutdown or a failure of the process as a whole. The quantitative causality is a measure of the probability of such an escalation happening. This quantitative causality may, for example, be encoded in strengths of the propagation paths, or in the importances of the individual entity states of health that are used when aggregating them to an overall state of health of the process. The quantitative causality is not necessarily dependent only on two particular entities that are connected by a propagation path. Rather, it may also depend on the layout of the plant as a whole. For example, the functionality of certain entities may be realized in the plant with a certain level of redundancy. One example for this is an arrangement of parallel pumps that share the work of transporting a certain amount of fluid. If one pump fails, the remaining pumps may make up at least partially for the shortfall.

In a particularly advantageous embodiment, the propagation paths of anomalies are determined based at least in part on a topology of material and/or energy flows between entities. Such flows are a primary reason why entities in an industrial process are dependent on each other. In particular, many chemical processes are multi-stage processes where the product of one stage is the educt that the next stage needs.

In a further advantageous embodiment, at least one known directional interaction path from a first entity to a second entity during normal operation of the plant may be expanded to a bidirectional propagation path for anomalies between the first entity and the second entity. This is based on the experience that an anomaly in a process may reverse a cause-and-effect relationship between different entities. For example, while the flow rate of a pump is normally causal for the fill level in a downstream tank, an anomaly may cause the tank to overfill, so that it cannot accept any more liquid from the pump. This in turn causes the flow rate of the pump to come to a halt because the liquid is not compressible.

Therefore, in a further particularly advantageous embodiment, at least one propagation path specifically comprises a cause-effect relationship between
- a first entity state variable of a first entity and a second entity state variable of a second entity; and/or
- occurrence of a first event in a first entity and occurrence of a second event in a second entity.

One possible source for these propagation paths is a set of already existing interlocking rules between triggering events and events that happen as a consequence of these triggering events. For example, if pressure in a vacuum chamber is too high, certain sensitive equipment, like a mass spectrometer or a getter pump, may be prevented from starting in order to prevent damage to this equipment.

However, propagation paths for anomalies between entities may also be determined in a data-driven manner without a priori knowledge. In a further particularly advantageous embodiment, the determining of at least one propagation path from a first entity to a second entity specifically comprises:
- computing a statistical impact of a first time series of a first entity state variable of the first entity onto a second time series of a second entity state variable of the second entity; and
- quantifying the strength of propagation of anomalies between the first and second entities based at least in part on this statistical impact.

For example, the computing of a statistical impact may comprise computing the Granger Causality, and/or the Transfer Entropy, between the first and second time series. The Granger Causality is a statistical hypothesis test for testing to which extent the first time series is useful for predicting the second time series. The Transfer Entropy focuses more on an information gain between probability distributions.

In a further advantageous embodiment, the determining of propagation paths may comprise:
- verifying a feasibility of each propagation path from a set of candidate propagation paths; and
- in response to a propagation path not being feasible, removing this propagation path from the set of candidate propagation paths.

In particular, when expanding a directional interaction path from a first entity to a second entity to a bidirectional interaction path between the first entity and the second entity, the reverse direction may turn out not to be feasible. For example, if material is transported from the first entity to the second entity by falling downwards, it cannot fall upwards again. Such infeasibilities of reverse interactions might even have been deliberately devised as safety features when designing the industrial plant. Therefore, removing infeasible propagation paths gives a more accurate picture of the overall state of health.

In a further advantageous embodiment, the importance of the state of health of an entity increases with the number, and/or the strengths, or propagation paths that comprise this entity. For example, a process module may produce a product that is used as educt by multiple downstream process modules. In another example, if the process comprises entities that reside on different physical plants connected by a pipeline, this pipeline may be a "single point of failure" for the whole process and therefore have a very high importance in the determining of the overall state of health.

For example, in a system with a pump and a pipe that feed in fluid to a tank, an overly high fill level of the tank may preclude the feeding of further fluid and cause backpressure on the pump. Therefore, the pump is in a causal relationship with the high fill level of the tank. But the pressure in the pipe is not in any causal relationship with another entity. Therefore, the state of health of the pump gets a higher importance than the state of health of the pipe in the overall state of health of the process.

In a further advantageous embodiment, the aggregating of individual states of health comprises computing a weighted sum of these individual states of health, wherein the weights are determined based on the importances of the respective individual states of health. This results in an easily interpretable indicator of the overall state of health, so that a threshold value for the binary classification of the overall state as "healthy" or "unhealthy" may be easily motivated. However, alternatively or in combination to the weighted sum, the aggregation of the individual states of health may also comprise, for example, multiplicative contributions. For example, if health is measured on a scale between 0 and 1, and a certain entity is a "single point of failure" for the functioning of the process as a whole, then the contribution of this entity may be multiplicative. The overall state of health of the process can then not be better than the state of health of the "single point of failure" entity.

As discussed before, in a particularly advantageous embodiment, the industrial process may be a chemical production process that converts one or more educts into one or more products. At least one entity in the arrangement of entities may be a pipe, a pump, or a tank. These are the entities with the most and strongest propagation paths for anomalies between them.

Disclosed, but not presently claimed, is also a second method for determining the state of health of an industrial process. In an analogous manner to the first method, the process is executed by at least one industrial plant comprising an arrangement of entities, and the state of each such entity is characterized by a set of entity state variables. Also, values, and/or time series of values, of the entity state variables are obtained.

In contrast to the first method, the values, and/or the time series of values, are now provided to a model of the industrial process as a whole. This model is implemented as a machine learning model. From the outcome of the model, a prediction of the state of health of the industrial process as a whole is obtained. To this end, akin to the models corresponding to individual entities that are used in the first method, the single model for the process as a whole may output a variable of the process from which the state of health may then be inferred, or it may directly predict the state of health.

The basic idea of exploiting the entity state variables to determine the overall state of health is the same that is also used in the first method. This second method, however, does not presume that a priori knowledge about interactions between entities is available. For example, the single model may be directly trained in a "black box" manner on training data that comprises values and/or time series of values of the entity state variables as inputs, and states of health of the process as a whole as ground truth labels. Which of the methods is more advantageous to use therefore depends on the amount of a priori information that is available in the concrete situation.

In a further advantageous embodiment, the machine learning model comprises a recurrent neural network, RNN, and/or a neural transformer network. These networks are particularly well suited for processing time series of state variables as sequences.

The method may be wholly or partially computer-implemented. The invention therefore also relates to one or more computer programs with machine-readable instructions that, when executed on one or more computers and/or compute instances, cause the one or more computers to perform the first method described above. In this context, a virtualization platform, a hardware controller, network infrastructure devices (such as switches, bridges, routers or wireless access points), as well as end devices in the network (such as sensors, actuators or other industrial field devices) that are able to execute machine readable instructions are to be regarded as computers as well.

The invention therefore also relates to a non-transitory storage medium, and/or to a download product, with the one or more computer programs. A download product is a product that may be sold in an online shop for immediate fulfillment by download. The invention also provides one or more computers and/or compute instances with the one or more computer programs, and/or with the one or more non-transitory machine-readable storage media and/or download products.

Irrespective of which method is used to determine the state of health, the determined state of health may be used to provide an early warning in case of a deteriorating process health. This may be exploited to take action in order to keep the plant safe. For example, in response to the determined state of health of the process meeting a predetermined criterion (such as falling below a predetermined threshold value), parameters that characterize the behavior of the process may be modified and/or optimized such that the state of health of the process improves. Such parameters may, for example, comprise set-point values for low-level controllers. In particular, in one example, the one or more models that are used to predict the overall state of health of the process may be called upon multiple times for different candidate actions to be taken on the process in order to determine which of these candidate actions is best to improve the overall state of health of the process. In this case, it is particularly advantageous if the overall state of health can be predicted much faster than in real-time. For example, it may then be even more advantageous to use surrogate models as an approximation for computationally expensive simulation models.

### DESCRIPTION OF THE FIGURES

In the following, the invention is illustrated using Figures without any intention to limit the scope of the invention. The Figures show:
Figure 1: Exemplary embodiment of the method 100 for determining the state of health of an industrial process;
Figure 2: Exemplary embodiment of the method 200 for determining the state of health of an industrial process;
Figure 3: Exemplary system where the methods 100, 200 may be applied.

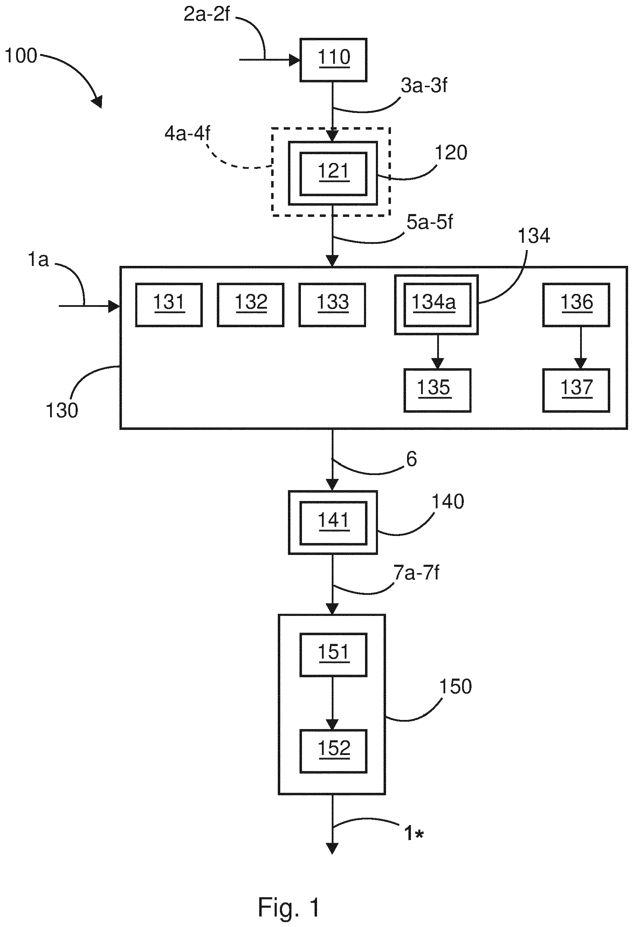

Figure 1 is a schematic flow chart of an embodiment of the method 100 for determining the state of health 1* of an industrial process 1. The process 1 is executed by at least one industrial plant comprising an arrangement of entities 2a-2f. The state of each such entity 2a-2f is characterized by a set of entity state variables 3a-3f.

In step 110, values, and/or time series of values, of the entity state variables 3a-3f are obtained.

In step 120, for each entity 2a-2f, the values 3a-3f, and/or time series of values 3a-3f, are provided to a model 4a-4f corresponding to the respective entity 2a-2f. In this manner, a prediction of the state of health 5a-5f of the respective entity 2a-2f is obtained.

According to block 121, the model 4a-4f corresponding to at least one entity 2a-2f may comprise
- a machine learning model; and/or
- a simulation model; and/or
- a surrogate approximation of this simulation model.

In step 130, based at least in part on the layout 1a of the industrial plant executing the process 1, propagation paths 6 for anomalies between said entities 2a-2f are determined.

According to block 131, such propagation paths 6 may be determined based at least in part on a topology of material and/or energy flows between entities 2a-2f.

According to block 132, at least one known directional interaction path from a first entity 2a-2f to a second entity 2a-2f during normal operation of the plant may be expanded to a bidirectional propagation path for anomalies between the first entity and the second entity.

According to block 133, at least one propagation path 6 may specifically comprise a cause-effect relationship between
- a first entity state variable 3a-3f of a first entity 2a-2f and a second entity state variable 3a-3f of a second entity 2a-2f; and/or
- occurrence of a first event in a first entity 2a-2f and occurrence of a second event in a second entity 2a-2f.

According to block 134, a statistical impact of a first time series of a first entity state variable 3a-3f of the first entity 2a-2f onto a second time series of a second entity state variable 3a-3f of the second entity 2a-2f may be computed. In particular, according to block 134a, this may comprise computing the Granger Causality, and/or the Transfer Entropy, between the first and second time series. According to block 135, based at least in part on the computed statistical impact, the strength of propagation of anomalies between the first and second entities 2a-2f may be quantified.

According to block 136, a feasibility of each propagation path 6 from a set of candidate propagation paths 6 may be verified. According to block 137, in response to a propagation path 6 not being feasible, this propagation path 6 may be removed from the set of candidate propagation paths 6.

In step 140, based at least in part on the propagation paths 6, importances 7a-7f of the states of health 5a-5f of the individual entities (2a-2f) for the overall state of health (1*) of the process may be determined.

According to block 141, the importance 7a-7f of the state of health 5a-5f of an entity 2a-2f may increase with the number, and/or the strengths, of propagation paths 6 that comprise this entity 2a-2f.

In step 150, based at least in part on said importances 7a-7f, the individual states of health 5a-5f of the entities 2a-2f are aggregated to obtain the overall state of health 1* of the process 1.

According to block 151, based on the importances 7a-7f of the respective individual states of health 5a-5f, weights for these individual states of health 5a-5f may be determined. According to block 152, using these weights, a weighted sum of these individual states 5a-5f may be computed.

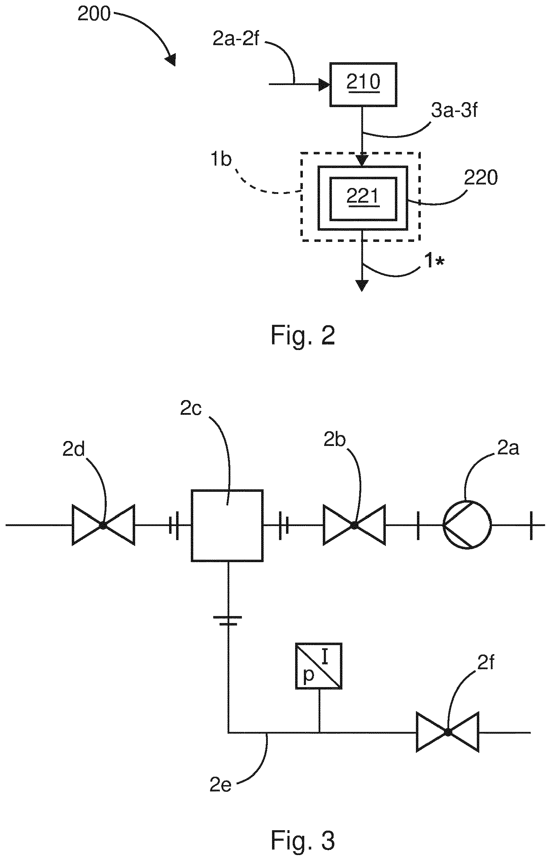

Figure 2 illustrates the method 200 for determining the state of health 1* of an industrial process 1 not presently claimed. Like the method 100, the method 200 starts from the situation that the process 1 is executed by at least one industrial plant comprising an arrangement of entities 2a-2f, and that the state of each such entity 2a-2f is characterized by a set of entity state variables 3a-3f.

In step 210, values, and/or time series of values, of the entity state variables 3a-3f are obtained.

In step 220, the values, and/or the time series of values, are provided to a model 1b of the industrial process 1. This model 1b is implemented as a machine learning model. From the outcome of the model, a prediction of the state of health 1* of the industrial process is obtained. The model 1b may directly output the sought state of health 1*, or it may output a variable of the process 1 that is indicative of the state of health 1*.

According to block 221, the machine learning model 1b comprises a recurrent neural network, RNN, and/or a neural transformer network that is particularly well suited for processing time series and other sequences of values.

Figure 3 shows an exemplary system where the methods 100 and/or 200 may be applied. The system comprises concrete examples for the entities 2a-2f. Fluid is pumped by a pump 2a through a valve 2b into a tank 2c. The tank 2c may also be filled from another source via a valve 2d. Fluid from the tank 2c passes through a pressurized pipe 2e to another valve 2f. The pressure in the pipe 2e may be measured by means of a pressure gauge that converts the pressure p to an electrical current I.

### List of reference signs:

- 1: industrial process
- 1*: state of health of process 1
- 1a: topology of plant executing process 1
- 1b: model of process 1
- 2a-2f: entities of plant executing process 1
- 3a-3f: entity state variables for entities 2a-2f
- 4a-4f: models corresponding to entities 2a-2f
- 5a-5f: states of health of entities 2a-2f
- 6: propagation paths for anomalies between entities 2a-2f
- 7a-7f: importances of states of health 5a-5f
- 100: first method for determining state of health 1*
- 110: obtaining entity state variables 3a-3f
- 120: providing values 3a-3f to models 4a-4f
- 121: using particular types of models
- 130: determining propagation paths 6 between entities 2a-2f
- 131: evaluating topology of material and/or energy flows
- 132: expanding directional paths to bidirectional propagation paths 6
- 133: considering particular cause-effect relationships
- 134: computing statistical impact between time series
- 134a: computing Granger Causality or Transfer Entropy
- 135: quantifying strength of propagation
- 136: verifying feasibility of propagation path 6
- 137: removing infeasible propagation path 6
- 140: determining importances 7a-7f
- 141: making importances 7a-7f dependent on propagation paths 6
- 150: aggregating states of health 5a-5f using importances 7a-7f
- 151: computing weights based on importances 7a-7f
- 152: computing weighted sum
- 200: second method for determining state of health 1*
- 210: obtaining entity state variables 3a-3f
- 220: providing values to model 1b of process 1
- 221: using RNN or transformer network
- p: pressure
- I: electrical current

## Claims

1. A method (100) for determining the state of health (1*) of an industrial process (1), wherein the process (1) is executed by at least one industrial plant comprising an arrangement of entities (2a-2f) and the state of each such entity (2a-2f) is **characterized by** a set of entity state variables (3a-3f), comprising the steps of:
• obtaining (110) values, and/or time series of values, of the entity state variables (3a-3f);
• for each entity (2a-2f), providing (120) the values (3a-3f), and/or time series of values (3a-3f), to a model (4a-4f) corresponding to the respective entity (2a-2f), thereby obtaining a prediction of the state of health (5a-5f) of the respective entity (2a-2f);
• determining (130), based at least in part on the layout (1a) of the industrial plant executing the process (1), propagation paths (6) for anomalies between said entities (2a-2f);
• determining (140), based at least in part on said propagation paths (6), importances (7a-7f) of the states of health (5a-5f) of the individual entities (2a-2f) for the overall state of health (1*) of the process; and
• aggregating (150), based at least in part on said importances (7a-7f), the individual states of health (5a-5f) of the entities (2a-2f) to obtain the overall state of health (1*) of the process (1).

2. The method (100) of claim 1, wherein the propagation paths (6) of anomalies are determined (131) based at least in part on a topology of material and/or energy flows between entities (2a-2f).

3. The method (100) of any one of claims 1 to 2,
wherein at least one known directional interaction path from a first entity (2a-2f) to a second entity (2a-2f) during normal operation of the plant is expanded (132) to a bidirectional propagation path for anomalies between the first entity and the second entity.

4. The method (100) of any one of claims 1 to 3, wherein at least one propagation path (6) specifically comprises (133) a cause-effect relationship between
• a first entity state variable (3a-3f) of a first entity (2a-2f) and a second entity state variable (3a-3f) of a second entity (2a-2f); and/or
• occurrence of a first event in a first entity (2a-2f) and occurrence of a second event in a second entity (2a-2f).

5. The method (100) of any one of claims 1 to 4, wherein the determining (130) of at least one propagation path (6) from a first entity (2a-2f) to a second entity (2a-2f) specifically comprises:
• computing (134) a statistical impact of a first time series of a first entity state variable (3a-3f) of the first entity (2a-2f) onto a second time series of a second entity state variable (3a-3f) of the second entity (2a-2f); and
• quantifying (135) the strength of propagation of anomalies between the first and second entities (2a-2f) based at least in part on this statistical impact.

6. The method (100) of claim 5, wherein the computing (134) of a statistical impact specifically comprises: computing (134a) the Granger Causality, and/or the Transfer Entropy, between the first and second time series.

7. The method (100) of any one of claims 1 to 6, wherein the determining (130) of propagation paths (6) specifically comprises:
• verifying (136) a feasibility of each propagation path (6) from a set of candidate propagation paths (6); and
• in response to a propagation path (6) not being feasible, removing (137) this propagation path (6) from the set of candidate propagation paths (6).

8. The method (100) of any one of claims 1 to 7, wherein the importance (7a-7f) of the state of health (5a-5f) of an entity (2a-2f) increases (141) with the number, and/or the strengths, of propagation paths (6) that comprise this entity (2a-2f).

9. The method (100) of any one of claims 1 to 8, wherein the model (4a-4f) corresponding to at least one entity (2a-2f) comprises (121):
• a machine learning model; and/or
• a simulation model; and/or
• a surrogate approximation of this simulation model.

10. The method (100) of any one of claims 1 to 9, wherein the aggregating (150) of individual states of health (5a-5f) comprises computing (152) a weighted sum of these individual states of health (5a-5f), wherein the weights are determined (151) based on the importances (7a-7f) of the respective individual states of health (5a-5f).

11. The method (100) of any one of claims 1 to 10, wherein the industrial process (1) is a chemical production process that converts one or more educts into one or more products, and at least one entity in the arrangement of entities is a pipe, a pump, or a tank.

12. A computer program, comprising machine-readable instructions that, when executed by one or more computers, cause the one or more computers to perform the method (100) of any one of claims 1 to 11.

13. A non-transitory machine-readable storage medium, and/or a download product, with the computer program of claim 12.

14. One or more computers with the computer program of claim 12, and/or with the non-transitory machine-readable storage medium and/or download product of claim 13.

## Patentansprüche

1. Verfahren (100) zum Ermitteln des Gesundheitszustands (1*) eines industriellen Prozesses (1), wobei der Prozess (1) von mindestens einer Industrieanlage ausgeführt wird, die eine Anordnung von Entitäten (2a-2f) umfasst, und der Zustand jeder solchen Entität (2a-2f) durch einen Satz von Entitäts-Zustandsvariablen (3a-3f) charakterisiert ist, umfassend die Schritte:
• Beschaffen (110) von Werten, und/oder von Zeitreihen von Werten, der Entitäts-Zustandsvariablen (3a-3f);
• für jede Entität (2a-2f): Bereitstellen (120) der Werte (3a-3f), und/oder der Zeitreihen von Werten (3a-3f), an ein Modell (4a-4f), das zu der jeweiligen Entität (2a-2f) korrespondiert, so dass eine Vorhersage des Gesundheitszustandes (5a-5f) der jeweiligen Entität (2a-2f) erhalten wird;
• Ermitteln (130) von Ausbreitungspfaden (6) für Anomalien zwischen den besagten Entitäten (2a-2f), basierend mindestens zum Teil auf dem Layout (1a) der Industrieanlage, die den Prozess (1) ausführt;
• Ermitteln (140) von Wichtigkeiten (7a-7f) der Gesundheitszustände (5a-5f) der individuellen Entitäten (2a-2f) für den Gesamt-Gesundheitszustand (1*) des Prozesses, basierend mindestens zum Teil auf den besagten Ausbreitungspfaden (6); und
• Aggregieren (150) der individuellen Gesundheitszustände (5a-5f) der Entitäten (2a-2f), um den Gesamt-Gesundheitszustand (1*) des Prozesses (1) zu erhalten, basierend mindestens zum Teil auf den besagten Wichtigkeiten (7a-7f).

2. Verfahren (100) nach Anspruch 1, wobei die Ausbreitungspfade (6) von Anomalien basierend mindestens zum Teil auf einer Topologie von Material- und/oder Energieflüssen zwischen Entitäten (2a-2f) ermittelt werden (131).

3. Verfahren (100) nach einem der Ansprüche 1 bis 2, wobei mindestens ein bekannter gerichteter Wechselwirkungspfad von einer ersten Entität (2a-2f) zu einer zweiten Entität (2a-2f) während des Normalbetriebs der Industrieanlage zu einem bidirektionalen Ausbreitungspfad für Anomalien zwischen der ersten Entität und der zweiten Entität erweitert wird (132).

4. Verfahren (100) nach einem der Ansprüche 1 bis 3, wobei mindestens ein Ausbreitungspfad (6) spezifisch eine Ursache-Wirkungs-Beziehung zwischen
• einer ersten Entitäts-Zustandsvariablen (3a-3f) einer ersten Entität (2a-2f) und einer zweiten Entitäts-Zustandsvariablen (3a-3f) einer zweiten Entität (2a-2f); und/oder
• Auftreten eines ersten Ereignisses in einer ersten Entität (2a-2f) and Auftreten eines zweiten Ereignisses in einer zweiten Entität (2a-2f)
umfasst (133).

5. Verfahren (100) nach einem der Ansprüche 1 bis 4, wobei das Ermitteln (130) mindestens eines Ausbreitungspfades (6) von einer ersten Entität (2a-2f) zu einer zweiten Entität (2a-2f) spezifisch umfasst:
• Berechnen (134) eines statistischen Einflusses einer ersten Zeitreihe einer ersten Entitäts-Zustandsvariablen (3a-3f) der ersten Entität (2a-2f) auf eine zweite Zeitreihe einer zweiten Entitäts-Zustandsvariablen (3a-3f) der zweiten Entität (2a-2f); und
• Quantifizieren (135) der Stärke der Ausbreitung von Anomalien zwischen den ersten und zweiten Entitäten (2a-2f) basierend mindestens zum Teil auf diesem statistischen Einfluss.

6. Verfahren (100) nach Anspruch 5, wobei das Berechnen (134) eines statistischen Einflusses spezifisch umfasst: Berechnen (134a) der Granger-Kausalität, und/oder der Transfer-Entropie, zwischen der ersten und zweiten Zeitreihe.

7. Verfahren (100) nach einem der Ansprüche 1 bis 6, wobei das Ermitteln (130) von Ausbreitungspfaden (6) spezifisch umfasst:
• Verifizieren (136) einer Machbarkeit jedes Ausbreitungspfades (6) aus einer Menge von Kandidaten-Ausbreitungspfaden (6); und
• in Antwort darauf, dass ein Ausbreitungspfad (6) nicht machbar ist, Entfernen (137) dieses Ausbreitungspfads (6) aus der Menge von Kandidaten-Ausbreitungspfaden (6).

8. Verfahren (100) nach einem der Ansprüche 1 bis 7, wobei die Wichtigkeit (7a-7f) des Gesundheitszustandes (5a-5f) einer Entität (2a-2f) mit der Anzahl, und/oder den Stärken, von Ausbreitungspfaden (6), die diese Entität (2a-2f) umfassen, zunimmt (141).

9. Verfahren (100) nach einem der Ansprüche 1 bis 8, wobei das Modell (4a-4f), das zu mindestens einer Entität (2a-2f) korrespondiert,
• ein Machine Learning-Modell; und/oder
• ein Simulationsmodell; und/oder
• eine ersatzweise Näherung dieses Simulationsmodells
umfasst (121).

10. Verfahren (100) nach einem der Ansprüche 1 bis 9, wobei das Aggregieren (150) individueller Gesundheitszustände (5a-5f) umfasst, eine gewichtete Summe dieser individuellen Gesundheitszustände (5a-5f) zu berechnen (152), wobei die Gewichte basierend auf den Wichtigkeiten (7a-7f) der jeweiligen individuellen Gesundheitszustände (5a-5f) ermittelt werden (151).

11. Verfahren (100) nach einem der Ansprüche 1 bis 10, wobei der industrielle Prozess (1) ein chemischer Produktionsprozess ist, der ein oder mehrere Edukte in ein oder mehrere Produkte umwandelt, und mindestens eine Entität in der Anordnung von Entitäten ein Rohr, eine Pumpe oder ein Tank ist.

12. Computerprogramm, umfassend maschinenlesbare Anweisungen, die, wenn sie auf einem oder mehreren Computern ausgeführt werden, den oder die Computer dazu veranlassen, das Verfahren (100) nach einem der Ansprüche 1 bis 11 auszuführen.

13. Nicht-flüchtiges maschinenlesbares Speichermedium, und/oder Downloadprodukt, mit dem Computerprogramm nach Anspruch 12.

14. Ein oder mehrere Computer mit dem Computerprogramm nach Anspruch 12, und/oder mit dem nicht-flüchtigen maschinenlesbaren Speichermedium und/oder Downloadprodukt nach Anspruch 13.

## Revendications

1. Procédé (100) de détermination de l'état de santé (1*) d'un processus industriel (1), le processus (1) étant exécuté par au moins une installation industrielle comprenant un agencement d'entités (2a-2f) et l'état de chacune de ces entités (2a-2f) étant **caractérisé par** un ensemble de variables d'état d'entité (3a-3f), comprenant les étapes suivantes :
• l'obtention (110) de valeurs et/ou de séries chronologiques de valeurs des variables d'état d'entité (3a-3f) ;
• pour chaque entité (2a-2f), la fourniture (120) des valeurs (3a-3f) et/ou des séries chronologiques de valeurs (3a-3f) à un modèle (4a-4f) correspondant à l'entité (2a-2f) respective, de manière à obtenir une prédiction de l'état de santé (5a-5f) de l'entité (2a-2f) respective ;
• la détermination (130), sur la base au moins en partie de la disposition (1a) de l'installation industrielle exécutant le processus (1), de chemins de propagation (6) pour des anomalies entre lesdites entités (2a-2f) ;
• la détermination (140), sur la base au moins en partie desdits chemins de propagation (6), d'importances (7a-7f) des états de santé (5a-5f) des entités (2a-2f) individuelles pour l'état de santé global (1*) du processus ; et
• l'agrégation (150), sur la base au moins en partie desdites importances (7a-7f), des états de santé (5a-5f) individuels des entités (2a-2f) afin d'obtenir l'état de santé global (1*) du processus (1).

2. Procédé (100) selon la revendication 1, les chemins de propagation (6) d'anomalies étant déterminés (131) sur la base au moins en partie d'une topologie de flux de matière et/ou d'énergie entre des entités (2a-2f).

3. Procédé (100) selon l'une quelconque des revendications 1 à 2, au moins un chemin d'interaction directionnel connu depuis une première entité (2a-2f) jusqu'à une deuxième entité (2a-2f) au cours du fonctionnement normal de l'installation étant développé (132) en un chemin de propagation bidirectionnel pour des anomalies entre la première entité et la deuxième entité.

4. Procédé (100) selon l'une quelconque des revendications 1 à 3, au moins un chemin de propagation (6) comprenant plus particulièrement (133) une relation de cause à effet entre
• une première variable d'état d'entité (3a-3f) d'une première entité (2a-2f) et une deuxième variable d'état d'entité (3a-3f) d'une deuxième entité (2a-2f) ; et/ou
• la survenance d'un premier événement dans une première entité (2a-2f) et la survenance d'un deuxième événement dans une deuxième entité (2a-2f).

5. Procédé (100) selon l'une quelconque des revendications 1 à 4, la détermination (130) d'au moins un chemin de propagation (6) depuis une première entité (2a-2f) jusqu'à une deuxième entité (2a-2f) comprenant plus particulièrement :
• le calcul (134) d'un impact statistique d'une première série chronologique d'une première variable d'état d'entité (3a-3f) de la première entité (2a-2f) sur une deuxième série chronologique d'une deuxième variable d'état d'entité (3a-3f) de la deuxième entité (2a-2f) ; et
• la quantification (135) de la force de propagation d'anomalies entre les première et deuxième entités (2a-2f) sur la base au moins en partie de cet impact statistique.

6. Procédé (100) selon la revendication 5, le calcul (134) d'un impact statistique comprenant plus particulièrement : le calcul (134a) de la Causalité au sens de Granger et/ou de l'Entropie de Transfert entre les première et deuxième séries chronologiques.

7. Procédé (100) selon l'une quelconque des revendications 1 à 6, la détermination (130) de chemins de propagation (6) comprenant plus particulièrement :
• la vérification (136) d'une faisabilité de chaque chemin de propagation (6) parmi un ensemble de chemins de propagation (6) candidats ; et
• en réponse à la non-faisabilité d'un chemin de propagation (6), l'élimination (137) de ce chemin de propagation (6) de l'ensemble de chemins de propagation (6) candidats.

8. Procédé (100) selon l'une quelconque des revendications 1 à 7, l'importance (7a-7f) de l'état de santé (5a-5f) d'une entité (2a-2f) augmentant (141) avec le nombre et/ou les forces de chemins de propagation (6) qui comprennent cette entité (2a-2f).

9. Procédé (100) selon l'une quelconque des revendications 1 à 8, le modèle (4a-4f) correspondant à au moins une entité (2a-2f) comprenant (121) :
• un modèle d'apprentissage machine ; et/ou
• un modèle de simulation ; et/ou
• une approximation de substitution de ce modèle de simulation.

10. Procédé (100) selon l'une quelconque des revendications 1 à 9, l'agrégation (150) d'états de santé (5a-5f) individuels comprenant le calcul (152) d'une somme pondérée de ces états de santé (5a-5f) individuels, les poids étant déterminés (151) sur la base des importantes (7a-7f) des états de santé (5a-5f) individuels respectifs.

11. Procédé (100) selon l'une quelconque des revendications 1 à 10, le processus industriel (1) étant un processus de fabrication de produits chimiques qui transforme un ou plusieurs réactifs en un ou plusieurs produits, et au moins une entité dans l'agencement d'entités étant un tuyau, une pompe, ou une cuve.

12. Programme d'ordinateur, comprenant des instructions lisibles par machine qui, lorsqu'elles sont exécutées par un ou plusieurs ordinateurs, amènent les un ou plusieurs ordinateurs à réaliser le procédé (100) selon l'une quelconque des revendications 1 à 11.

13. Support de stockage non transitoire lisible par machine et/ou produit à télécharger, comportant le programme d'ordinateur selon la revendication 12.

14. Ordinateur(s) comportant le programme d'ordinateur selon la revendication 12 et/ou le support de stockage non transitoire lisible par machine et/ou le produit à télécharger selon la revendication 13.
